# EUROPÄISCHE PATENTANMELDUNG

(11) **EP 4 759 741 A1**
(43) Veröffentlichungstag der Anmeldung: **17.06.2026**
(21) Anmeldenummer: 25222486.0
(22) Anmeldetag: 11.12.2025
(51) Int. Cl.: B65C 9/18, B33Y 80/00

(54) **SPANNZAPFEN FÜR ETIKETTENBANDROLLE**

(30) Priorität: 12.12.2024 DE 102024137460
(71) Anmelder: Krones AG, 93073 Neutraubling (DE)
(72) Erfinder: EHRISMANN, Tobias, 93073 Neutraubling (DE); HAFNER, Dieter, 93073 Neutraubling (DE)
(74) Vertreter: v. Bezold & Partner Patentanwälte - PartG mbB

(57) **Zusammenfassung**

Die Erfindung betrifft u.a. einen Spannzapfen (18) zum Verspannen einer Etikettenbandrolle (10). Der Spannzapfen (18) weist mehrere Klemmbereiche (20) auf, die verteilt um einen Umfang des Spannzapfens (18) herum zum Innenklemmen eines Rollenkerns der Etikettenbandrolle (10) angeordnet sind. Die mehreren Klemmbereiche (20) sind aus mehreren aneinander angrenzenden, vorzugsweise additiv gefertigten, Materialschichten gebildet.

## Beschreibung

### Technisches Gebiet

Die Erfindung betrifft einen Spannzapfen zum Verspannen einer Etikettenbandrolle und eine Vorrichtung zum Verspannen und Abrollen einer Etikettenbandrolle für eine Etikettiereinrichtung. Die Erfindung betrifft ferner ein Verfahren zum Handhaben einer Etikettenbandrolle, ein Verfahren zum Herstellen eines Spannzapfens und ein Computerprogrammprodukt.

### Technischer Hintergrund

In einer Behälterbehandlungsanlage kann eine Etikettiereinrichtung zum Etikettieren von Behältern umfasst sein. Beispielsweise kann die Etikettiereinrichtung die Behälter mit Etiketten von einer Etikettenbandrolle (Rolle mit Etikettenmaterial) etikettieren.

Herkömmlich werden die Etikettenbandrollen von einem Bediener per Hand nachgelegt. Dazu kann der Bediener eine neue Etikettenbandrolle nehmen und diese über ein mittiges Spannelement auf den Rollenteller / Folienteller legen. Mittels des Spannelements kann die Etikettenbandrolle zentrisch gespannt und gegen Verdrehung relativ zum Rollenteller gesichert sein. Ggf. muss der Benutzer weitere Aufgaben erfüllen, wie bspw. das positionsgerechte Abschneiden des Etikettenbandes, das Aufbringen eines doppelseitigen Klebebands auf das Etikettenband oder das Einbringen des Etikettenbandes in eine automatische Verklebung.

Die DE 10 2021 125 133 A1 beschreibt einen mobilen Roboter, ein Versorgungssystem und ein Verfahren zum Etikettenbandrollenwechsel an einem Etikettieraggregat zur Etikettierung von Behältern. Der mobile Roboter umfasst demnach eine Fahrzeugeinheit zum Ortswechsel des Roboters und eine Manipulatoreinheit mit einem Mehrachsmanipulator und einem zugehörigen Endeffektor zum Manipulieren von Etikettenbandrollen. Dadurch, dass der Endeffektor zum tragenden außenumfänglichen Greifen der Etikettenbandrollen und entleerter Rollenkerne von Etikettenbandrollen ausgebildet ist, lassen sich ergonomisch problematische Arbeitsschritte beim Nachlegen von Etikettenbandrollen ausschließlich maschinell und mit großer Präzision sowie in materialschonender Weise bewerkstelligen.

Der Erfindung liegt die Aufgabe zu Grunde, eine verbesserte und vereinfachte Technik zum Spannen von Etikettenbandrollen, z. B. an drehbaren Rollentellern, für eine Etikettiereinrichtung zu schaffen. Bevorzugt soll die Technik eine automatisierte Bestückung mit einer Etikettenbandrolle erleichtern.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft einen Spannzapfen zum Verspannen einer Etikettenbandrolle, vorzugsweise an einem Rollenteller. Der Spannzapfen weist mehrere, vorzugsweise hohle, Klemmbereiche, die (z. B. gleichmäßig) verteilt um einen Umfang des Spannzapfens herum zum Innenklemmen eines Rollenkerns der Etikettenbandrolle (Klemmen eines Rollenkerns der Etikettenbandrolle von innen) angeordnet sind, auf. Die mehreren Klemmbereiche sind aus mehreren aneinander angrenzenden, vorzugsweise additiv gefertigten, Materialschichten, vorzugsweise PA-Materialschichten oder TPU-Materialschichten, gebildet.

Vorteilhaft kann der Spannzapfen somit auf einfache Weise mittels additiver Fertigung hergestellt werden. Die mittels der additiven Fertigung herstellbaren Strukturen ermöglichen, bewegbare und elastisch ausdehnbare Abschnitte zum Ausbilden der Klemmbereiche direkt in dem Spannzapfen zu integrieren. Beispielsweise kann dadurch auf einen aufwendigen Zusammenbau und eine aufwendige Wartung des Spannzapfens verzichtet werden.

In einem Ausführungsbeispiel sind die mehreren Klemmbereiche zum Innenklemmen des Rollenkerns der Etikettenbandrolle betätigbar, vorzugsweise fluidbetätigbar, besonders bevorzugt pneumatisch betätigbar.

In einem weiteren Ausführungsbeispiel weisen die mehreren Klemmbereiche jeweils eine, vorzugsweise profilierte und/oder zylindermantelsegmentförmige, Klemmfläche zum Kontaktieren einer Innenumfangsfläche des Rollenkerns auf. Bevorzugt weisen die mehreren Klemmbereiche ferner jeweils (mindestens) eine Hohlkammer auf, die innenliegend zu der jeweiligen Klemmfläche angeordnet und zum (z. B. elastischen) Ausdehnen fluidbeaufschlagbar ist, zum Bewegen der jeweiligen Klemmfläche (z. B. radial) nach außen (z. B. geführt von (z. B. Schwalbenschwanz-) Führung(en) des Spannzapfens).

Vorzugsweise beschränkt / beschränken die Führung(en) eine Bewegbarkeit der Klemmflächen auf ein Bewegen in einer Radialrichtung bezüglich einer Mittelachse des Spannzapfens.

In einer Ausführungsform sind die Hohlkammern jeweils blockförmig, ringsegmentförmig, hohlzylindersegmentförmig oder durch einen Balgabschnitt des jeweiligen Klemmbereichs gebildet. Alternativ oder zusätzlich sind die Hohlkammern über (mindestens) einen, vorzugsweise ringförmigen, Verbindungskanal miteinander verbunden. Alternativ oder zusätzlich sind die Hohlkammern über einen Pneumatikanschluss des Spannzapfens mit Druckluft befüllbar.

In einer weiteren Ausführungsform weist der Spannzapfen mehrere Verbindungsbereiche auf, die (z. B. gleichmäßig) verteilt um den Umfang des Spannzapfens herum jeweils zwischen zwei benachbarten Klemmbereichen der mehreren Klemmbereiche angeordnet sind und diese zwei benachbarten Klemmbereiche miteinander verbinden. Die mehreren Verbindungsbereiche sind relativ zu den mehreren Klemmbereichen zurückversetzt, vorzugsweise radial nach innen. Vorzugsweise sind die mehreren Klemmbereiche und die mehreren Verbindungsbereiche integral-einstückig miteinander ausgebildet. Bevorzugt sind die mehreren Verbindungsbereiche aus mehreren aneinander angrenzenden, vorzugsweise additiv gefertigten, Materialschichten, vorzugsweise PA-Materialschichten oder TPU-Materialschichten, gebildet. Beispielsweise sind die mehreren Verbindungsbereiche Vollkörper oder weisen eine innere Stützstruktur (z. B. 3D-Gitter) auf.

Vorteilhaft können die Verbindungsbereiche ermöglichen, dass der Spannzapfen in Kombination mit einem Innengreifer zum Übernehmen und Übergeben der Etikettenbandrolle verwendet werden kann. Vorteilhaft können Innenklemmbacken des Innengreifers beim Übernehmen und Übergeben in durch die Verbindungsbereiche geschaffene Zwischenräume zwischen den Klemmbereichen eintauchen.

Bevorzugt sind die mehreren Verbindungsbereiche und die mehreren Klemmbereiche abwechselnd in Umfangsrichtung um eine Mittelachse des Spannzapfens herum angeordnet.

Vorzugsweise kann eine Anzahl der Verbindungsbereiche gleich einer Anzahl der Klemmbereiche sein.

In einer Ausführungsvariante ist der Spannzapfen vollständig aus mehreren aneinander angrenzenden, vorzugsweise additiv gefertigten, Materialschichten, vorzugsweise PA-Materialschichten und/oder TPU-Materialschichten, gebildet.

In einer weiteren Ausführungsvariante weist der Spannzapfen ferner einen, vorzugsweise hülsenförmigen, Innenkern auf, der die mehreren Klemmbereiche und optional mehrere Verbindungsbereiche des Spannzapfens von innen abstützt. Vorteilhaft kann damit eine stabile Abstützung der Klemmbereiche von innen erreicht werden, wodurch beispielsweise Klemmbereiche vergleichsweise flexibel / biegsam ausgeführt werden können.

In einem Ausführungsbeispiel ist mindestens eines erfüllt von:
- der Innenkern ist aus mehreren aneinander angrenzenden, vorzugsweise additiv gefertigten, Materialschichten, vorzugsweise TPU-Materialschichten, gebildet;
- ein Material der den Innenkern bildenden Materialschichten weist eine größere (z. B. Shore-) Härte auf als ein Material der die mehreren Klemmbereiche (und optional die mehreren Verbindungsbereiche) bildenden Materialschichten;
- der Innenkern ist lösbar mit den Klemmbereichen verbunden, vorzugsweise mittels einer Montageabdeckung und/oder über Schraubverbindungen;
- eine Außenumfangsfläche des Innenkerns begrenzt Hohlkammern der Klemmbereiche (z. B. innenseitig) und/oder einen ringförmigen Verbindungskanal des Spannzapfens.

Ein weiterer Aspekt betrifft eine Vorrichtung zum Verspannen und Abrollen einer Etikettenbandrolle für eine Etikettiereinrichtung. Die Vorrichtung weist (mindestens) einen Rollenteller zum Abrollen der Etikettenbandrolle und (mindestens) einen Spannzapfen wie hierin offenbart, der zum Verspannen der Etikettenbandrolle an dem Rollenteller angeordnet und bevorzugt lösbar (z. B. mittels Schraubverbindungen) an dem Rollenteller befestigt ist, vorzugsweise über eine (z. B. haubenförmige) Montageabdeckung an einer Oberseite des Spannzapfens, auf.

In einem Ausführungsbeispiel weist die Vorrichtung ferner eine Koppeleinrichtung auf, die dazu ausgebildet ist, eine Fluidverbindung zum Zuführen von Druckluft zu dem Spannzapfen (z. B. zu den Hohlkammern des Spannzapfens) und/oder zum Abführen von Luft aus dem Spannzapfen (z. B. aus den Hohlkammern des Spannzapfens) zu koppeln und zu entkoppeln. Vorteilhaft kann somit bei gekoppelter Fluidverbindung der Spannzapfen mit Druckluft zum Verspannen der Etikettenbandrolle versorgt werden bzw. Druckluft aus dem Spannzapfen zum Freigeben der Etikettenbandrolle abgelassen werden.

In einem weiteren Ausführungsbeispiel ist mindestens eines erfüllt von:
- die Koppeleinrichtung ist unterhalb oder radial außen von dem Rollenteller angeordnet;
- die Fluidverbindung verläuft abschnittsweise (z. B. mittels Schlauchleitung(en) oder Rohrleitung(en)) durch den Rollenteller;
- die Koppeleinrichtung ist zum Koppeln mit und Entkoppeln von einem Anschlussstück, das in oder an dem Rollenteller zum Mitdrehen mit dem Rollenteller (z. B. an einer Unterseite oder einer Außenumfangsseite des Rollentellers) angeordnet ist, angeordnet;
- die Koppeleinrichtung weist ein, vorzugsweise pneumatisch, ein- und ausfahrbares Koppelstück (z. B. Kolben einer Kolben-Zylinder-Einheit) zum Koppeln und Entkoppeln der Fluidverbindung auf (z. B. zum Koppeln und Entkoppeln mit dem Anschlussstück);
- die Koppeleinrichtung ist pneumatisch oder motorisch angetrieben;
- die Fluidverbindung weist ein Rückschlagventil auf;
- ein Drehantrieb, der antreibend mit dem Rollenteller verbunden ist, ist dazu konfiguriert, den Rollenteller in eine vorgegebene Koppelstellung zu drehen, in der die Fluidverbindung mittels der Koppeleinrichtung koppelbar ist.

In einer Ausführungsform weist der Rollenteller eine, vorzugweise oberseitige, Kontaktfläche zum Kontaktieren der Etikettenbandrolle auf. Die Kontaktfläche weist mindestens eine Griffmulde zum (z. B. händischen) Untergreifen der Etikettenbandrolle auf. Vorzugsweise kann die mindestens eine Griffmulde sich in einer Radialrichtung des Rollentellers erstrecken. Bevorzugt kann sich die mindestens eine Griffmulde bis hin zu einem Außenumfang des Rollentellers erstrecken. Vorteilhaft kann auf diese Weise eine manuelle Handhabung der Etikettenbandrolle vereinfacht werden, wenn dies erforderlich ist.

Ein weiterer Aspekt betrifft eine Anlage aufweisend eine Etikettiereinrichtung und eine Vorrichtung wie hierin offenbart. Die Vorrichtung kann mit der Etikettiereinrichtung zum Zuführen eines von der Vorrichtung abgerollten Etikettenbands zu der Etikettiereinrichtung verbunden sein.

Beispielsweise kann die Anlage eine Behälterbehandlungsanlage (z. B. zum Temperieren, Herstellen, Reinigen, Beschichten, Prüfen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie) sein.

Beispielsweise können die Behälter als Flaschen, Dosen, Kanister, Kartons, Flakons, Tuben usw. ausgeführt sein.

Ein weiterer Aspekt betrifft ein Verfahren zum Handhaben einer Etikettenbandrolle. Das Verfahren weist auf: Verspannen der Etikettenbandrolle mittels eines Spannzapfens wie hierin offenbart oder mittels eines Spannzapfens einer Vorrichtung wie hierin offenbart. Die mehreren Klemmbereiche klemmen einen Rollenkern der Etikettenbandrolle von innen, wobei vorzugsweise Hohlkammern der mehreren Klemmbereiche durch Druckluftbeaufschlagung (z. B. elastisch) ausgedehnt werden. Vorteilhaft können mit dem Verfahren die gleichen Vorteile erzielt werden, die hierin bereits unter Bezugnahme auf den Spannzapfen erläutert wurden.

In einem Ausführungsbeispiel weist das Verfahren ferner mindestens eines auf von:
- Drehen eines Rollentellers in eine vorgegebene Koppelstellung (z. B. mittels eines Drehantriebs) und, in der Koppelstellung, Koppeln einer Fluidverbindung mittels einer Koppeleinrichtung zum Zuführen von Druckluft zu dem Spannzapfen zum Verspannen der Etikettenbandrolle und/oder zum Abführen von Druckluft aus dem Spannzapfen zum Freigeben der Etikettenbandrolle (z. B. mittels einer Koppeleinrichtung);
- Übergeben der, vorzugsweise vollen, Etikettenbandrolle an den Spannzapfen mittels eines Innengreifers, dessen Innenklemmbacken den Rollenkern der Etikettenbandrolle von innen klemmen und beim Übergeben in Zwischenräume (z. B. gebildet durch zurückversetzte Verbindungsbereiche des Spannzapfens) zwischen den Klemmbereichen eintauchen; und
- Übernehmen der, vorzugsweise leeren, Etikettenbandrolle von dem Spannzapfen mittels eines Innengreifers, dessen Innenklemmbacken den Rollenkern der Etikettenbandrolle von innen klemmen und beim Übernehmen in Zwischenräume (z. B. gebildet durch zurückversetzte Verbindungsbereiche des Spannzapfens) zwischen den Klemmbereichen eintauchen.

Ein weiterer Aspekt betrifft ein Verfahren zum Herstellen eines Spannzapfens wie hierin offenbart. Das Verfahren weist auf: additives Fertigen des Spannzapfens und/oder der mehreren Klemmbereiche (und optional der mehreren Verbindungsbereiche und/oder des Innenkerns), vorzugsweise in einem FLM-Verfahren. Vorteilhaft können mit dem Verfahren die gleichen Vorteile erzielt werden, die hierin bereits unter Bezugnahme auf den Spannzapfen erläutert wurden.

Ein weiterer Aspekt betrifft ein Computerprogrammprodukt aufweisend (z. B. mindestens ein computerlesbares Speichermedium mit darauf gespeicherten) Anweisungen, die eine additive Fertigungsvorrichtung (z. B. 3D-Drucker) veranlassen, ein Verfahren wie hierin offenbart zum Herstellen eines Spannzapfens durchzuführen oder einen Spannzapfen wie hierin offenbart in einer Vielzahl von Materialschichten in einem additiven Fertigungsverfahren (z. B. FLM-Verfahren) herzustellen.

Beispielsweise kann das Computerprogrammprodukt eine Datei mit einer Repräsentation des Spannzapfens aufweisen. Beispielsweise kann die Repräsentation ein 3D-Modell des Spannzapfens sein. Beispielsweise kann die Repräsentation mehrere Schichten aufweisen, die bspw. die mehreren Materialschichten repräsentieren können.

Die zuvor beschriebenen bevorzugten Ausführungsformen und Merkmale der Erfindung sind beliebig miteinander kombinierbar.

Es wird explizit darauf hingewiesen, dass die hierin offenbarten Merkmale auch in Kombination mit einem Spannzapfen offenbart sind, der nicht additiv gefertigt ist bzw. dessen Klemmbereiche nicht aus mehreren aneinander angrenzenden, vorzugsweise additiv gefertigten, Materialschichten gebildet sind.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Darstellung eines Spannzapfens gemäß einem Ausführungsbeispiel an einem Rollenteller, wobei der Spannzapfen eine Etikettenbandrolle verspannt;
- Figur 2: eine weitere perspektivische Darstellung des beispielhaften Spannzapfens bei einer Übernahme oder Übergabe der Etikettenbandrolle mittels eines Innengreifers;
- Figur 3: eine perspektivische Darstellung eines beispielhaften Spannzapfens;
- Figur 4: eine perspektivische Schnittansicht des beispielhaften Spannzapfens von Figur 3;
- Figur 5: eine weitere perspektivische Schnittansicht des beispielhaften Spannzapfens von Figur 3;
- Figur 6: eine weitere perspektivische Schnittansicht des beispielhaften Spannzapfens von Figur 3;
- Figur 7: eine perspektivische Darstellung eines weiteren beispielhaften Spannzapfens;
- Figur 8: eine perspektivische Schnittansicht des weiteren beispielhaften Spannzapfens von Figur 7;
- Figur 9: eine weitere perspektivische Schnittansicht des weiteren beispielhaften Spannzapfens von Figur 7;
- Figur 10: eine perspektivische Darstellung eines weiteren anderen beispielhaften Spannzapfens;
- Figur 11: eine perspektivische Schnittansicht des weiteren anderen beispielhaften Spannzapfens von Figur 10;
- Figur 12: eine weitere perspektivische Schnittansicht des weiteren anderen beispielhaften Spannzapfens von Figur 10;
- Figur 13: eine Vorrichtung zum Verspannen und Abrollen von Etikettenbandrollen gemäß einem Ausführungsbeispiel;
- Figur 14: eine perspektivische Unteransicht eines Abschnitts der beispielhaften Vorrichtung von Figur 13;
- Figur 15: perspektivische Schnittansicht durch einen Abschnitt der beispielhaften Vorrichtung von Figur 13;
- Figur 16: eine Schnittansicht durch einen Abschnitt der beispielhaften Vorrichtung von Figur 13; und
- Figur 17: eine perspektivische Darstellung eines Abschnitts der beispielhaften Vorrichtung von Figur 13, wobei ein Rollenteller und eine Grundplatte der beispielhaften Vorrichtung transparent dargestellt sind.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

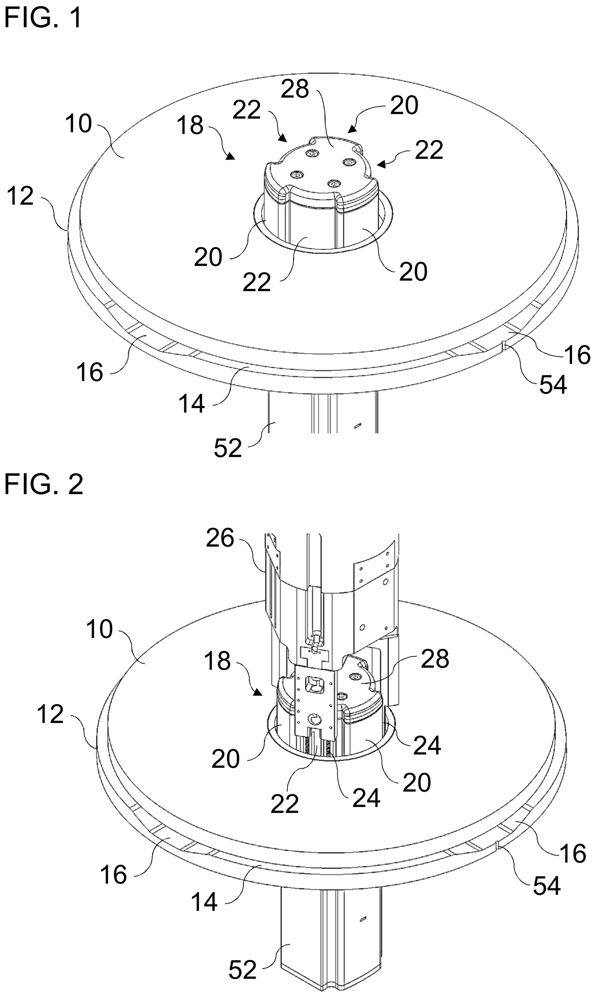

Die Figuren 1 und 2 zeigen einen Spannzapfen 18 zum Verspannen einer Etikettenbandrolle 10 an einem Rollenteller 12. Bevorzugt kann der Spannzapfen 18 die Etikettenbandrolle 10 drehfest bezüglich des Rollentellers 12 verspannen. Bevorzugt kann eine Mittelachse des Spannzapfens 18 vertikal ausgerichtet sein. Bevorzugt kann der Rollenteller 12 horizontal ausgerichtet sein.

Die von dem Spannzapfen 18 auf dem Rollenteller 12 verspannte Etikettenbandrolle 10 kann durch Drehung des Rollentellers 12 abgerollt und beispielsweise zu einer Etikettiereinrichtung zum Etikettieren von Objekten, wie beispielsweise Behältern, zugeführt werden.

Beispielsweise kann das von der Etikettenbandrolle 10 abgerollte Etikettenband zu einem Etikettieraggregat der Etikettiereinrichtung zugeführt werden (nicht dargestellt in Figuren 1 und 2). Das Etikettieraggregat kann beispielsweise an einer Peripherie eines Rundläufer-Objektförderers der Etikettiereinrichtung angeordnet sein. Bevorzugt kann das Etikettieraggregat die von dem Rundläufer-Objektförderer geförderten Objekte, vorzugsweise Behälter, beim Passieren des Etikettieraggregats mit Etiketten aus dem abgerollte Etikettenband etikettieren.

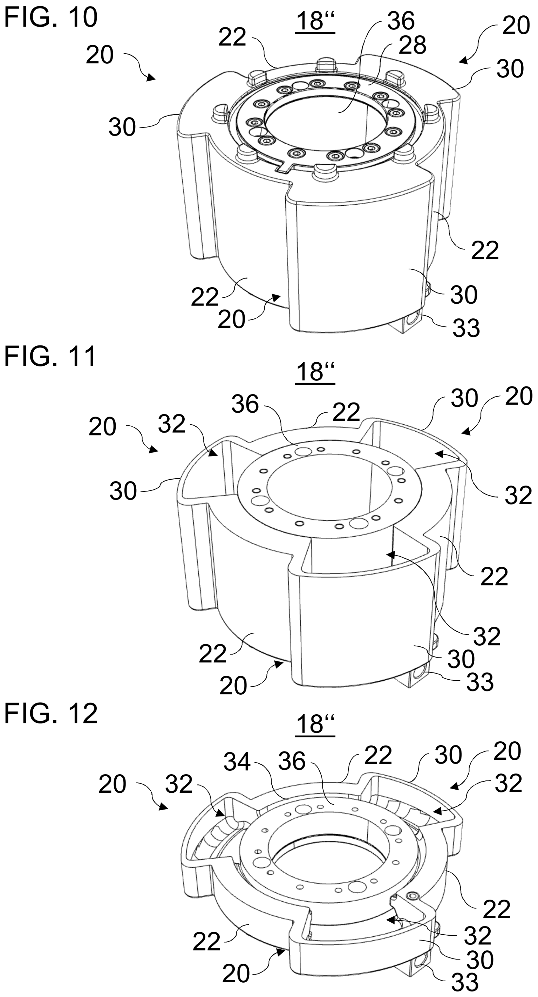

Der Rollenteller 12 kann auch als Folienteller bezeichnet werden. Beispielsweise ist der Rollenteller 12 scheibenförmig. Bevorzugt ist der Rollenteller 12 zum Abrollen der Etikettenbandrolle 10 drehbar. Beispielsweise kann der Rollenteller 12 zusammen mit einem weiteren Rollenteller in einer Vorrichtung zum Verspannen und Abrollen von Etikettenbandrollen für eine Etikettiereinrichtung umfasst sein (siehe z. B. Vorrichtung 38 in den Figuren 12 bis 16).

Bevorzugt kann der Rollenteller 12 eine, vorzugweise oberseitige, Kontaktfläche 14 aufweisen. Die Etikettenbandrolle 10 kann die Kontaktfläche 14 kontaktieren. Bevorzugt kann die Etikettenbandrolle 10 mittels der Kontaktfläche 14 unterseitig von dem Rollenteller 12 abgestützt sein.

Vorzugsweise kann die Kontaktfläche 14 mindestens eine Griffmulde 16 aufweisen. An der Griffmulde 16 kann beispielsweise die Etikettenbandrolle 10 bei manueller Bestückungstätigkeit händisch untergriffen werden. Bevorzugt kann die mindestens eine Griffmulde 16 als eine langgestreckte Vertiefung in der Kontaktfläche 14 ausgeführt sein.

Bevorzugt kann sich die mindestens eine Griffmulde 16 in einer Radialrichtung des Rollentellers 12 erstrecken. Beispielsweise kann sich die Griffmulde 16 benachbart zu einem Innenumfang des Rollentellers 12 aus erstrecken. Beispielsweise kann Griffmulde 16 sich bis hin zu einem Außenumfang des Rollentellers 12 erstrecken.

Beispielsweise sind mehrere, z. B. zwei, drei oder vier, Griffmulden 16 umfasst. Die mehreren Griffmulden 16 können in Umfangsrichtung (z. B. gleichmäßig) verteilt in der Kontaktfläche 14 angeordnet sein.

Zusätzlich oder alternativ zur erläuterten Anwendung des Spannzapfens 18 in Kombination mit dem Rollenteller 12 ist es jedoch bspw. auch möglich, dass der Spannzapfen 18 auf andere Art und Weise eingesetzt wird. Beispielsweise kann der Spannzapfen 18 als ein Endeffektor eines stationären oder mobilen Roboters zum Handhaben einer Etikettenbandrolle 10 umfasst sein. Beispielsweise kann der Spannzapfen 18 zusammen mit weiteren Spannzapfen 18 in einem Rollenspeicher zum Speichern mehrerer Etikettenbandrollen 10 umfasst sein.

Der Spannzapfen 18 kann bspw. zylinderförmig oder hülsenförmig sein. Der Spannzapfen 18 weist mehrere Klemmbereiche 20 auf. Die Klemmbereiche 20 sind vorzugsweise hohl. Bevorzugt kann der Spannzapfen 18 ferner mehrere Verbindungsbereiche 22 aufweisen. Die Verbindungsbereiche 22 sind vorzugsweise Vollkörper. Alternativ könnten die Verbindungsbereiche 22 bspw. eine innere Stützstruktur, wie ein 3D-Gitter, aufweisen.

Die Klemmbereiche 20 sind verteilt um einen (Außen-) Umfang des Spannzapfens 18 herum angeordnet. Bevorzugt sind die Klemmbereiche 20 voneinander beabstandet angeordnet, z. B. bezüglich einer Umfangsrichtung um eine Mittelachse des Spannzapfens 18.

Mittels der Klemmbereiche 20 kann ein Rollenkern der Etikettenbandrolle 10 von innen geklemmt werden. Die Klemmbereiche 20 können dabei eine Innenumfangsfläche des Rollenkerns der Etikettenbandrolle 10 kontaktieren.

Bevorzugt sind die Klemmbereiche 20 zum Innenklemmen des Rollenkerns der Etikettenbandrolle 10 betätigbar. Beispielsweise sind die Klemmbereiche 20 zum Innenklemmen der Etikettenbandrolle 10 fluidbetätigbar, z.B. mittels Druckluft.

Beispielsweise können zwei, drei, vier oder mehr Klemmbereiche 20 umfasst sein. Bevorzugt sind die mehreren Klemmbereiche 20 gleichmäßig verteilt um den Umfang des Spannzapfens 18 herum angeordnet.

Die Verbindungsbereiche 22 können verteilt um den (Außen-) Umfang des Spannzapfens 18 herum jeweils zwischen zwei benachbarten Klemmbereichen 20 angeordnet sein. Die Verbindungsbereiche 22 können die zwei jeweils benachbarten Klemmbereiche 20 miteinander verbinden.

Bevorzugt sind die Verbindungsbereiche 22 relativ zu den mehreren Klemmbereichen 20 zurückversetzt. Im Einzelnen können die Verbindungsbereiche 22 radial nach innen hin zu einer Mittelachse des Spannzapfens 18 zurückversetzt zu den Klemmbereichen 20 angeordnet sein. Bevorzugt sind die Klemmbereiche 20 und die Verbindungsbereiche 22 integral-einstückig miteinander ausgebildet.

Wie beispielhaft in Figur 2 dargestellt ist, können die zurückversetzten Verbindungsbereiche 22 Zwischenräume zwischen den Klemmbereichen 20 schaffen. In diese Zwischenräume können Innenklemmbacken 24 eines Innengreifers 26 beim Übernehmen und/oder Übergeben der Etikettenbandrolle 10 eintauchen. Die Innenklemmbacken 24 können den Rollenkern der Etikettenbadrolle 10 somit beim Übernehmen und/oder Übergeben ebenfalls von innen klemmen (verspannen). Der Innengreifer 26 kann bspw. ein Endeffektor eines mobilen oder stationären Handhabungsroboters zum Handhaben von Etikettenbandrollen 10 sein.

Der Innengreifer 26 kann komplementär zu dem Spannzapfen 18 ausgeführt sein. Im Einzelnen kann der Innengreifer 26 mit seinen Innenklemmbacken 24 und Zwischenräumen zwischen den Innenklemmbacken 24 bevorzugt komplementär zu dem Spannzapfen 18 mit seinen Verbindungsbereichen 22 und seinen Klemmbereichen 20 sein.

Bevorzugt ist der gesamte Spannzapfen 18 aus mehreren aneinander angrenzenden, additiv gefertigten Materialschichten gebildet. Beispielsweise kann der Spannzapfen in einem FLM-Verfahren (Fused Layer Modelling-Verfahren, auch als FFM-Verfahren (Fused Filament Fabrication-Verfahren) bekannt) additiv gefertigt werden. Die Materialschichten können bspw. PA-Materialschichten (Polyamid-Materialschichten) und/oder TPU-Materialschichten (thermoplastisches Polyurethan-Materialschichten) sein. Im Einzelnen können die Klemmbereiche 20 und die Verbindungsbereiche 22 aus den mehreren aneinander angrenzenden Materialschichten gebildet sein.

Der Spannzapfen 18 kann lösbar an dem Rollenteller 12 befestigt sein, z. B. mittels mehrerer Schraubverbindungen. Die Schraubverbindungen können sich durch Durchgangslöcher des Spannzapfens 18 hindurcherstrecken, z. B. von einer Oberseite des Spannzapfens 18 zu einer Unterseite des Spannzapfens 18 zum Einschrauben in den Rollenteller 12.

Es ist möglich, dass der Spannzapfen 18 über eine Montageabdeckung 28 an dem Rollenteller 12 befestigt ist. Die Montageabdeckung 28 kann bspw. an einer Oberseite / Stirnseite des Spannzapfens 18 angeordnet und abgestützt sein. Die Montageabdeckung 28 kann die Schraubverbindungen abstützen, z. B. an den Schraubenköpfen der Schraubverbindungen. Bevorzugt kann die Montageabdeckung 28 haubenförmig oder schalenförmig sein und einen oberen Endabschnitt des Spannzapfens 18 abdecken.

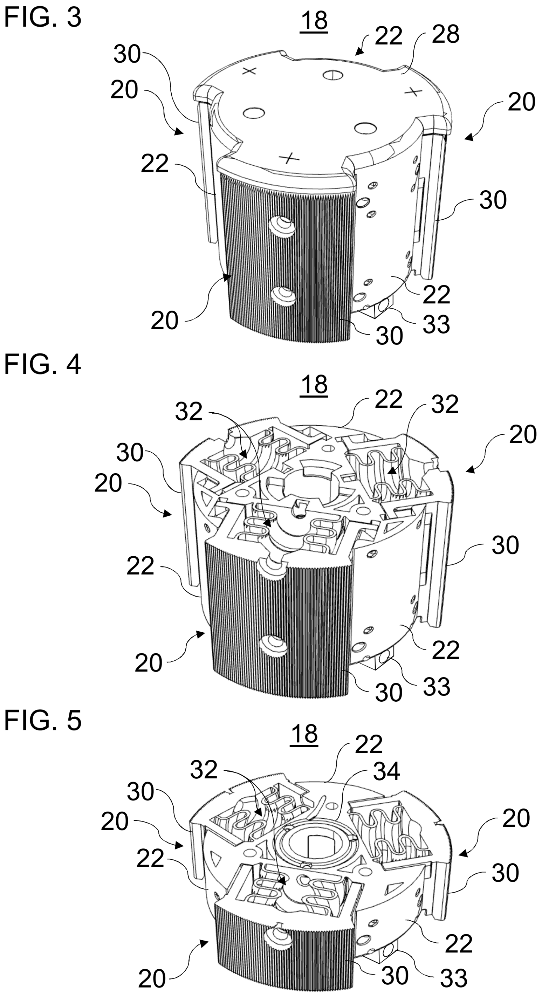

Die Figuren 3 bis 6 zeigen einen beispielhaften Spannzapfen 18.

Die Klemmbereiche 20 können jeweils eine äußere Klemmfläche 30 und mindestens eine Hohlkammer 32 aufweisen.

Die Klemmflächen 30 können jeweils nach außen gewandt sein. Die Klemmflächen 30 können eine Innenumfangsfläche des Rollenkerns der Etikettenbandrolle 10 beim Verspannen der Etikettenbandrolle 10 kontaktieren. Bevorzugt können die Klemmflächen 30 profiliert sein, zum Beispiel verzahnt oder gerippt. Beispielsweise können die Klemmflächen 30 jeweils eine Zylindermantelsegmentform aufweisen.

Die mindestens eine Hohlkammer 32 eines jeweiligen Klemmbereichs 20 kann innenliegend zu dem der jeweiligen Klemmfläche 30 angeordnet sein.

Die Hohlkammern 32 sind zum Ausdehnen beaufschlagbar, bevorzugt mit Druckluft. Beim Ausdehnen können die Hohlkammern 32 die Klemmfläche 30 des jeweiligen Klemmbereichs 20 radial nach außen bewegen, zum Verspannen des Rollenkerns der Etikettenbandrolle 10.

Beispielsweise kann der Spannzapfen 18 einen Pneumatikanschluss 33 aufweisen. Der Pneumatikanschluss 33 kann beispielsweise an einer Unterseite des Spannzapfens 18 angeordnet sein. Über den Pneumatikanschluss 33 kann Druckluft zu den Hohlkammern 32 zum Ausdehnen der Hohlkammern 32 zugeführt werden. Über den Pneumatikanschluss 33 kann Druckluft aus den Hohlkammern 32 zum Entspannen der Hohlkammern 32 abgelassen werden.

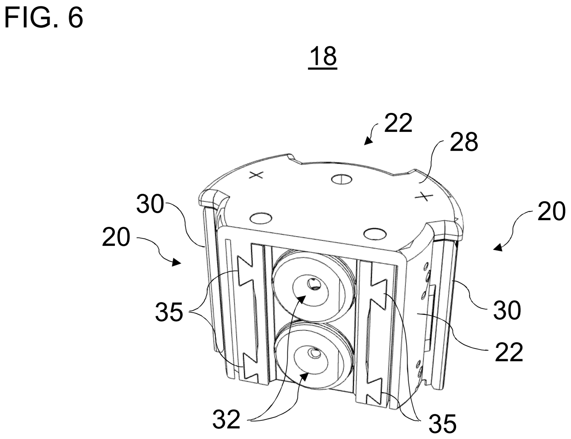

Bevorzugt kann eine Bewegung der Klemmflächen 30 geführt sein, wie beispielhaft in Figur 6 dargestellt ist. Vorzugsweise kann eine Bewegung der Klemmflächen 30 durch eine Führung 35 geführt sein.

Die Führungen 35 können eine Bewegung der Klemmflächen 30 in einer Radialrichtung bezüglich einer Mittelachse des Spannzapfens 18 führen. Bevorzugt können die Führungen 35 eine Bewegbarkeit der Klemmflächen 30 auf die Radialrichtung bezüglich der Mittelachse des Spannzapfens 18 beschränken. Vorzugsweise können die Führungen 35 ein Bewegen nach oben, nach unten, nach links (quer), nach rechts (quer) sowie ein Verdrehen und Verkippen der Klemmflächen 30 verhindern.

Beispielsweise können die benachbarten Verbindungsbereiche 22 die Führungen 35 aufweisen, oder die Führungen 35 können in den Klemmbereichen 20 selbst integriert sein. Die Führungen 35 können bevorzugt als Schwalbenschwanzführungen ausgeführt sein. Beispielsweise kann jede Klemmfläche 30 durch mehrere, z. B. vier, Schwalbenschwanzführungen geführt sein.

Vorteilhaft können die Führungen 35 ein Drehmoment, das beim Beschleunigen oder Abbremsen des Rollentellers 12 auf den Spannzapfen 18 einwirkt, aufnehmen. Dieses Drehmoment muss über den Spannzapfen 18 fließen um die Etikettenbandrolle 10 zu beschleunigen.

Die Klemmbereiche 20 können bspw. jeweils einen im Querschnitt im Wesentlichen U-förmigen Körper aufweisen. Die Klemmfläche 30 kann im Querschnitt an dem Mittelschenkel der U-Form angeordnet sein. Die Führungsflächen können im Querschnitt an den beiden Außenschenkeln der der U-Form angeordnet sein und die benachbarten Verbindungsbereiche 22 kontaktieren.

Die Hohlkammern 32 können bevorzugt durch einen Balgabschnitt des jeweiligen Klemmbereichs 20 gebildet sein. Der Spannzapfen 18 kann beispielsweise mehrere, zum Beispiel zwei, übereinander angeordnete, balgförmige Hohlkammern 32 je Klemmbereich 20 aufweisen.

Bevorzugt können die Hohlkammern 32 über mindestens einen Verbindungskanal 34 miteinander verbunden sein (siehe Figur 5). Ein Verbindungskanal 34 kann beispielsweise in einem unteren Abschnitt des Spannzapfens 18 angeordnet sein. Ein weiterer oder alternative Verbindungskanal 34 kann beispielsweise in einem oberen Abschnitt des Spannzapfens 18 angeordnet sein.

Der mindestens eine Verbindungskanal 34 kann sich vorzugsweise ringförmig durch die Klemmbereiche 20 und die Verbindungsbereiche 22 erstrecken.

Beispielsweise kann der Verbindungskanal 34 sich im im Wesentlichen gleichbleibenden Abstand um eine Mittelachse des Spannzapfens 18 erstrecken.

Es ist möglich, dass ein Verbindungskanal 34 den Pneumatikanschluss 33 des Spannzapfens 18 mit den Hohlkammern 32 verbindet.

Bevorzugt kann der Spannzapfen 18 mit den balgförmigen Hohlkammern 32 vollständig aus mehreren aneinander angrenzenden Materialschichten aus Polyamid, PA (z. B. PA12), additiv gefertigt sein. Entsprechend können die Klemmbereiche 20 und die Verbindungsbereiche 22 bevorzugt gemeinsam aus den mehreren aneinander angrenzenden Materialschichten aus Polyamid additiv gefertigt sein.

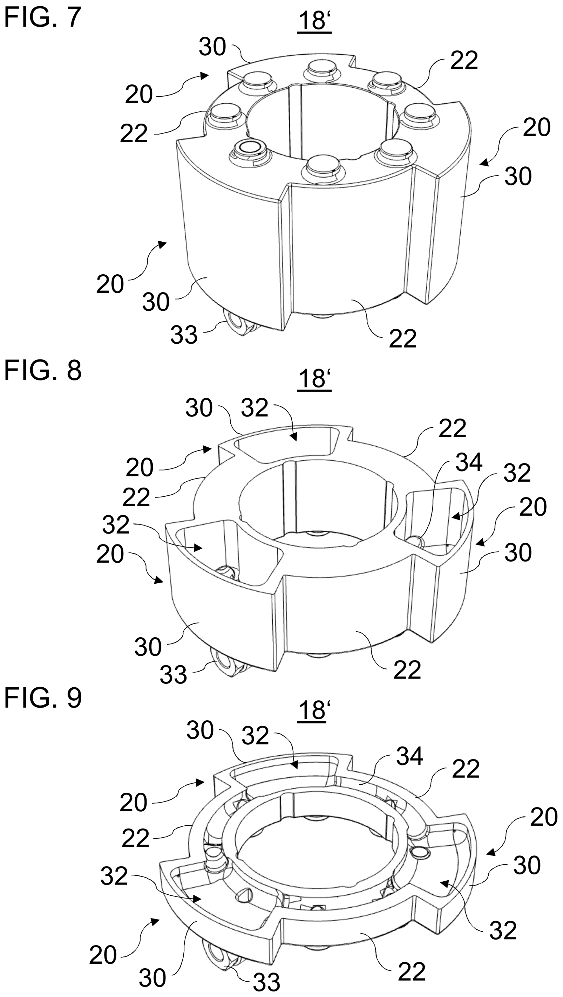

Die Figuren 7 bis 9 zeigen einen modifizierten Spannzapfen 18'.

Der Spannzapfen 18' kann bspw. mehrere Hohlkammer 32 aufweisen, die jeweils blockförmig sind. Bevorzugt kann die Blockform im Wesentlichen eine Ringsegmentform oder einen Hohlzylindersegmentform aufweisen.

Bevorzugt kann der Spannzapfen 18' vollständig aus mehreren aneinander angrenzenden Materialschichten aus thermoplastischen Polyurethan (TPU) additiv gefertigt sein. Entsprechend können die Klemmbereiche 20 und die Verbindungsbereiche 22 bevorzugt gemeinsam aus den mehreren aneinander angrenzenden Materialschichten aus thermoplastischen Polyurethan additiv gefertigt sein.

Vorzugsweise benötigt der Spannzapfen 18' keine Montageabdeckung 28 zum Befestigen an dem Rollenteller 12.

Die Figuren 10 bis 12 zeigen einen weiteren modifizierten Spannzapfen 18".

Der Spannzapfen 18" kann einen Innenkern 36 aufweisen. Der Innenkern 36 ist vorzugsweise hülsenförmig, wie dargestellt ist, oder zylinderförmig.

Bevorzugt kann der Innenkern 36 kann die Klemmbereiche 20 und die Verbindungsbereiche 22 von innen abstützen. Beispielsweise kann eine Außenumfangsfläche des Innenkerns 36 eine Innenumfangsfläche der Klemmbereiche 20 und der Verbindungsbereiche 22 kontaktieren.

Vorzugsweise kann der Innenkern 36 aus mehreren aneinander angrenzenden, additiv gefertigten Materialschichten gebildet sein. Ein Material der den Innenkern 36 bildenden Materialschichten weist bevorzugt eine größere (z. B. Shore-) Härte auf als ein Material der die mehreren Klemmbereiche 20 und Verbindungsbereiche 22 bildenden Materialschichten. Beispielsweise kann das Material der den Innenkern 36 bildenden Materialschichten thermoplastisches Polyurethan (TPU) sein. Das Material der die Klemmbereiche 20 und die Verbindungsbereiche 22 bildenden Materialschichten kann Polyamid (PA, z. B. PA12) sein.

Der Innenkern 36 kann beispielsweise lösbar mit den Klemmbereichen 20 und den Verbindungsbereichen 22 verbunden sein. Beispielsweise kann der Innenkern 36 über die Montagedeckung 28 lösbar mit den Klemmbereichen 20 und den Verbindungsbereichen 22 verbunden sein.

Beispielsweise kann ein ringförmiger Innenkragen der Klemmbereiche 20 und der Verbindungsbereiche 22 zwischen der Montageabdeckung 28 und dem Innenkern 36 geklemmt sein. Die Montageabdeckung 28 wiederum kann bspw. mit dem Innenkern 36 verschraubt sein.

Bevorzugt kann ein Außenumfang des Innenkerns 36 die Hohlkammern 32 und/oder den mindestens einen Verbindungskanal 34 begrenzen. Die Hohlkammern 32 können wiederum bevorzugt jeweils blockförmig sein. Vorzugsweise kann die Blockform im Wesentlichen eine Ringsegmentform oder einen Hohlzylindersegmentform aufweisen.

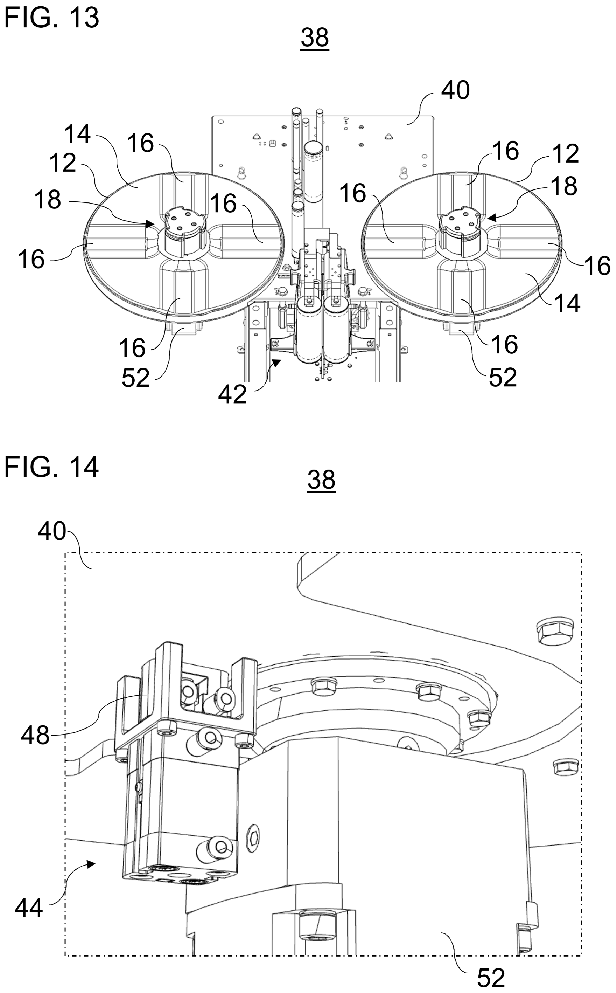

Figuren 13 bis 17 zeigen eine Vorrichtung 38 zum Verspannen und Abrollen einer Etikettenbandrolle für eine Etikettiereinrichtung.

Beispielsweise könnte die Vorrichtung 38 in einer Roboterzelle zusammen mit einem Handhabungsroboter zum Bestücken der Vorrichtung 38 mit Etikettenbandrollen 10 angeordnet sein.

Die Vorrichtung 38 weist mindestens einen Rollenteller 12 und mindestens einen Spannzapfen 18, der an dem Rollenteller 12 angeordnet und bevorzugt lösbar an dem Rollenteller 12 befestigt ist. Bevorzugt weist die Vorrichtung 38 zwei Einheiten aus je einem Rollenteller 12 und einem Spannzapfen 18 auf.

Beispielsweise kann die Vorrichtung 38 eine Grundplatte 40 aufweisen, die mit dem mindestens einen Rollenteller 12 verbunden ist. Die Grundplatte 40 kann den mindestens einen Rollenteller 12 bspw. drehbar abstützen.

Die Vorrichtung 38 kann bspw. ferner eine Verklebeeinrichtung 42 zum Verkleben von Bandenden von Etikettenbändern aufweisen.

Wie in den Figuren 14 bis 17 dargestellt ist, kann die Vorrichtung 38 je Rollenteller-Spannzapfen-Einheit eine Koppeleinrichtung 44 aufweisen.

Mittels der Koppeleinrichtung 44 kann vorzugsweise eine Fluidverbindung zum Zuführen von Druckluft zu dem Spannzapfen 18 und zum Abführen von Luft aus dem Spannzapfen 18 wahlweise gekoppelt oder entkoppelt werden. Die über die Fluidverbindung zugeführte Druckluft kann in die Hohlkammern 32 zum Ausdehnen der Hohlkammern 32 strömen bzw. aus den Hohlkammern 32 zum Entspannen der Hohlkammern 32 über die Fluidverbindung abgelassen werden.

Die Fluidverbindung kann beispielsweise mit einer Druckluftquelle zum Zuführen von Druckluft zu den Hohlkammern 32 und mit der Umgebung zum Ablassen von Druckluft aus den Hohlkammern 32 verbindbar sein.

Die Fluidverbindung kann bspw. durch den Rollenteller 12 hindurch verlaufen und an dem Pneumatikanschluss 33 des Spannzapfens 18 angeschlossen sein.

Bevorzugt kann die Koppeleinrichtung 44 unterhalb von dem Rollenteller 12 angeordnet sein (siehe Figuren 14 bis 17). Die Koppeleinrichtung 44 kann beispielsweise an einer Unterseite der Grundplatte 40 getragen sein. Beispielsweise kann die Koppeleinrichtung 44 von unten mit der Grundplatte 40 verschraubt sein.

Alternativ kann die Koppeleinrichtung 44 bspw. radial außen von dem Rollenteller 12 angeordnet sein (nicht in den Figuren dargestellt). Die Koppeleinrichtung 44 kann dann beispielsweise an einer Oberseite der Grundplatte 40 getragen sein. Beispielsweise kann die Koppeleinrichtung 44 von oben mit der Grundplatte 40 verschraubt sein.

Die Koppeleinrichtung 44 kann mit einem Anschlussstück 46 koppelbar und entkoppelbar sein. Das Anschlussstück 46 ist vorzugsweise zum Mitdrehen mit dem Rollenteller 12 angeordnet. Beispielsweise kann das Anschlussstück 46 an einer Unterseite oder einer Außenumfangsseite des Rollentellers 12 angeordnet sein.

Bevorzugt weist der Rollenteller 12 eine unterseitige oder außenumfangsseitige Aufnahmekammer auf. In der Aufnahmekammer kann das Anschlussstück 46 aufgenommen sein. Das Anschlussstück 46 kann beispielsweise mittels einer Schraubverbindung in der Aufnahmekammer gehalten sein.

Die Koppeleinrichtung 44 weist vorzugsweise ein ein- und ausfahrbares Koppelstück 48 zum Koppeln und Entkoppeln der Fluidverbindung auf. Bevorzugt ist das Koppelstück 48 vertikal ein- und ausfahrbar. Alternativ kann das Koppelstück 48 beispielsweise in einer Horizontalebene ein- und ausfahrbar sein (nicht in den Figuren dargestellt), zum Beispiel in einer Radialrichtung bezüglich einer Mittelachse des Rollentellers 12.

Das Koppelstück 48 kann beispielsweise pneumatisch oder motorisch ein- und ausgefahren werden. Bevorzugt kann das Koppelstück 48 ein Kolben einer als pneumatische Kolben-Zylinder-Einheit ausgeführten Koppeleinrichtung 44 sein. Die Kolben-Zylinder-Einheit kann beispielsweise eine doppeltwirkende Kolben-Zylinder-Einheit sein. Das Koppelstück 48 kann im ausgefahren Zustand das Anschlussstück 46 zum Koppeln der Fluidverbindung abgedichtet kontaktieren, zum Beispiel von unten. Zum Abdichten der Kopplung kann das Koppelstück 48 beispielsweise mindestens ein Dichtelement, zum Beispiel O-Ring, aufweisen. Zum Entkoppeln (Trennen) der Fluidverbindung kann das Koppelstück 48 eingefahren und damit von dem Anschlussstück 46 wegbewegt werden.

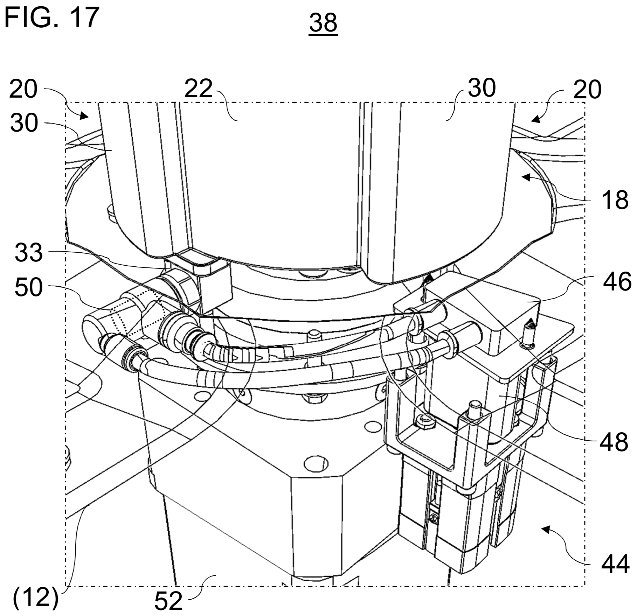

Beispielsweise weist die Fluidverbindung zwei Fluidkanäle auf. Über einen ersten Fluidkanal kann Druckluft zu dem Pneumatikanschluss 33 und damit zu den Hohlkammern 32 zugeführt werden. Über einen zweiten Fluidkanal kann Steuerluft (Druckluft) zu einem Rückschlagventil 50 (siehe Figur 17) zum Öffnen des Rückschlagventils 50 zugeführt werden. Über den ersten Fluidkanal kann dann bei geöffnetem Rückschlagventil 50 auch Druckluft aus dem Pneumatikanschluss 33 und damit aus den Hohlkammern 32 abgelassen werden.

Das Rückschlagventil 50 kann bspw. in dem ersten Fluidkanal angeordnet sein (siehe Figur 17). Vorzugsweise kann das Rückschlagventil 50 in dem ersten Fluidkanal benachbart zu dem Pneumatikanschluss 33 angeordnet sein.

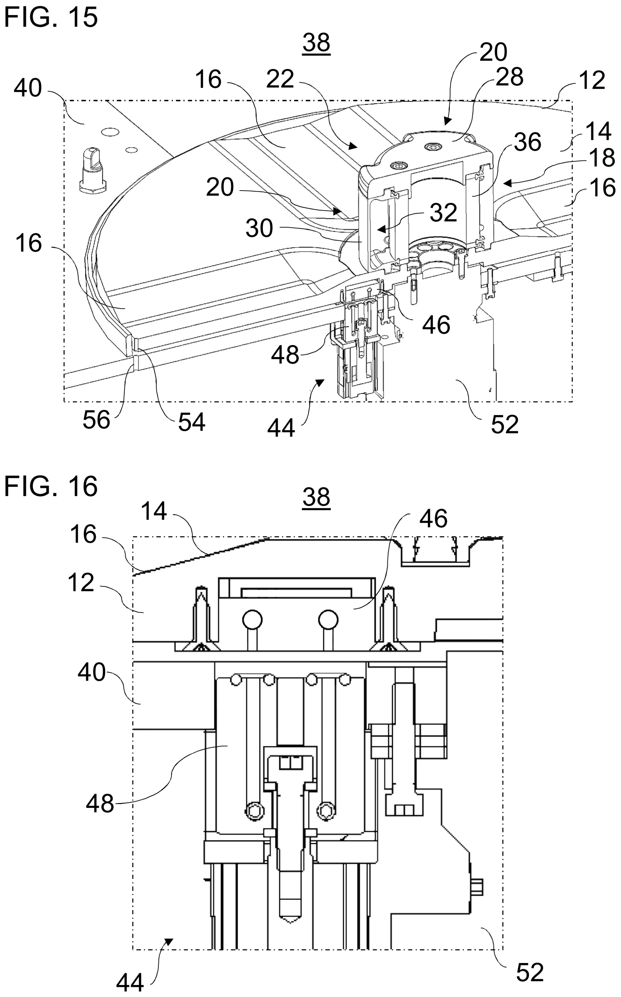

Die zwei Fluidkanäle der Fluidverbindung können durch das Koppelstück 48 (siehe z. B. Figuren 15 und 16), durch das Anschlussstück 46 (siehe z. B. Figuren 15, 16 und 17) und bspw. als Schlauch- oder Rohrleitungen durch den Rollenteller 12 (siehe z. B. Figur 17) verlaufen.

Beispielsweise kann die Koppeleinrichtung 44 die Fluidverbindung nur koppeln, wenn der Rollenteller 12 in einer vorgegebenen Koppelstellung (Koppeldrehstellung) ist. Entsprechend kann beispielsweise ein Ausdehnen des Spannzapfens 18 zum Verspannen einer Etikettenbandrolle 10 und ein Entlasten des Spannzapfens 18 zum Freigeben einer Etikettenbandrolle 10 in der Koppelstellung des Rollentellers 12 erfolgen. Hingegen kann bei entkoppelter Fluidverbindung der Rollenteller 12 zum Abrollen des Etikettenbands von der auf dem Spannzapfen 18 verspannten Etikettenbandrolle 10 gedreht werden.

Die vorgegebene Koppelstellung kann in einer Steuereinrichtung eines Drehantriebs 52, der antreibend mit dem Rollenteller 12 verbunden ist, gespeichert sein. Der Drehantrieb 52 kann bspw. ein Servomotor sein. Der Drehantrieb 52 kann bspw. einen Absolutwertgeber aufweisen. Unmittelbar vor dem Koppeln mittels der Koppeleinrichtung 44 kann der Drehantrieb 52 den Rollenteller 12 in die Koppelstellung drehen.

Beispielsweise kann die Koppelstellung initial wie folgt gespeichert werden. Der Rollenteller 12 kann an seinem Außenumfang eine Aufnahme 54, z. B. Nut, Tasche oder Durchgangsloch, aufweisen (siehe z. B. Figur 15). Die Grundplatte 40 kann ebenfalls eine Aufnahme 56, z. B. Nut, Tasche oder Durchgangsloch, aufweisen (siehe ebenfalls Figur 15). Der Rollenteller 12 kann manuell in eine Position gedreht werden, in der die Aufnahmen 54 und 56 fluchtend zueinander angeordnet und beispielsweise über einen Stift oder einen Bolzen miteinander verbunden werden können. Die Aufnahmen 54 und 56 sind so angeordnet, dass bei deren fluchtender Positionierung die Koppelstellung eingenommen ist. Die so eingestellte Position des Rollentellers 12 kann damit als die Koppelstellung in einer Steuereinrichtung des Drehantriebs 52 abgespeichert werden.

Alternativ zur Koppeleinrichtung 44 besteht bspw. die Möglichkeit, dass der Spannzapfen 18 mittels einer anderen Technik mit Druckluft versorgt und entlastet werden kann. Beispielsweise könnte der Spannzapfen 18 mittels einer Druckluftversorgungsleitung eines Roboters, der den Innengreifer 26 trägt (siehe Figur 2), mit Druckluft zum Verspannen der Etikettenbandrolle 10 versorgt werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Klemmbereiche des unabhängigen Anspruchs 1 offenbart und beanspruchbar, insbesondere auch ohne Notwendigkeit der Bildung der mehreren Klemmbereiche aus mehreren aneinander angrenzenden, vorzugsweise additiv gefertigten, Materialschichten. Alle Bereichsangaben hierin sind derart offenbart und beanspruchbar zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Etikettenbandrolle
- 12: Rollenteller
- 14: Kontaktfläche
- 16: Griffmulde
- 18: Spannzapfen
- 20: Klemmbereich
- 22: Verbindungsbereich
- 24: Innenklemmbacke
- 26: Innengreifer
- 28: Montageabdeckung
- 30: Klemmfläche
- 32: Hohlkammer
- 33: Pneumatikanschluss
- 34: Verbindungskanal
- 35: Führung
- 36: Innenkern
- 38: Vorrichtung
- 40: Grundplatte
- 42: Verklebeeinrichtung
- 44: Koppeleinrichtung
- 46: Anschlussstück
- 48: Koppelstück
- 50: Rückschlagventil
- 52: Drehantrieb
- 54: Aufnahme
- 56: Aufnahme
- 58: Roboterzelle
- 60: Roboter
- 62: Lagerplatz
- 64: Etikettenbandpuffer

## Patentansprüche

1. Spannzapfen (18) zum Verspannen einer Etikettenbandrolle (10), vorzugsweise an einem Rollenteller (12), wobei der Spannzapfen (18) aufweist:
mehrere, vorzugsweise hohle, Klemmbereiche (20), die verteilt um einen Umfang des Spannzapfens (18) herum zum Innenklemmen eines Rollenkerns der Etikettenbandrolle (10) angeordnet sind,
wobei:
die mehreren Klemmbereiche (20) aus mehreren aneinander angrenzenden, vorzugsweise additiv gefertigten, Materialschichten, vorzugsweise PA-Materialschichten oder TPU-Materialschichten, gebildet sind.

2. Spannzapfen (18) nach Anspruch 1, wobei:
die mehreren Klemmbereiche (20) zum Innenklemmen des Rollenkerns der Etikettenbandrolle (10) betätigbar, vorzugsweise fluidbetätigbar, besonders bevorzugt pneumatisch betätigbar, sind.

3. Spannzapfen (18) nach Anspruch 1 oder Anspruch 2, wobei die mehreren Klemmbereiche (20) jeweils aufweisen:
eine, vorzugsweise profilierte und/oder zylindermantelsegmentförmige, Klemmfläche (30) zum Kontaktieren einer Innenumfangsfläche des Rollenkerns; und
eine Hohlkammer (32), die innenliegend zu der jeweiligen Klemmfläche (30) angeordnet und zum Ausdehnen fluidbeaufschlagbar ist, zum Bewegen der jeweiligen Klemmfläche (30) nach außen,
wobei vorzugsweise mindestens eines erfüllt ist von:
die Hohlkammern (32) sind jeweils blockförmig, ringsegmentförmig, hohlzylindersegmentförmig oder durch einen Balgabschnitt des jeweiligen Klemmbereichs (20) gebildet;
die Hohlkammern (32) sind über einen, vorzugsweise ringförmigen, Verbindungskanal (34) miteinander verbunden; und
die Hohlkammern (32) sind über einen Pneumatikanschluss (33) des Spannzapfens (18) mit Druckluft befüllbar.

4. Spannzapfen (18) nach einem der vorherigen Ansprüche, ferner aufweisend:
mehrere Verbindungsbereiche (22), die verteilt um den Umfang des Spannzapfens (18) herum jeweils zwischen zwei benachbarten Klemmbereichen (20) der mehreren Klemmbereiche (20) angeordnet sind und diese zwei benachbarten Klemmbereiche (20) miteinander verbinden,
wobei:
die mehreren Verbindungsbereiche (22) relativ zu den mehreren Klemmbereichen (20) zurückversetzt sind, vorzugsweise radial nach innen,
wobei vorzugsweise mindestens eines erfüllt ist von:
die mehreren Klemmbereiche (20) und die mehreren Verbindungsbereiche (22) sind integral-einstückig miteinander ausgebildet;
die mehreren Verbindungsbereiche (22) sind aus mehreren aneinander angrenzenden, vorzugsweise additiv gefertigten, Materialschichten, vorzugsweise PA-Materialschichten oder TPU-Materialschichten, gebildet; und
die mehreren Verbindungsbereiche (22) sind Vollkörper oder weisen eine innere Stützstruktur auf.

5. Spannzapfen (18) nach einem der vorherigen Ansprüche, wobei:
der Spannzapfen (18) vollständig aus mehreren aneinander angrenzenden, vorzugsweise additiv gefertigten, Materialschichten, vorzugsweise PA-Materialschichten und/oder TPU-Materialschichten, gebildet ist.

6. Spannzapfen (18) nach einem der vorherigen Ansprüche, ferner aufweisend:
einen, vorzugsweise hülsenförmigen, Innenkern (36), der die mehreren Klemmbereiche (20) und optional mehrere Verbindungsbereiche (22) des Spannzapfens (18) von innen abstützt.

7. Spannzapfen (18) nach Anspruch 6, wobei mindestens eines erfüllt ist von:
der Innenkern (36) ist aus mehreren aneinander angrenzenden, vorzugsweise additiv gefertigten, Materialschichten, vorzugsweise TPU-Materialschichten, gebildet;
ein Material der den Innenkern (36) bildenden Materialschichten weist eine größere Härte auf als ein Material der die mehreren Klemmbereiche (20) bildenden Materialschichten;
der Innenkern (36) ist lösbar mit den Klemmbereichen (20) verbunden, vorzugsweise mittels einer Montageabdeckung (28) und/oder über Schraubverbindungen; und
eine Außenumfangsfläche des Innenkerns (36) begrenzt Hohlkammern (32) der Klemmbereiche (20) und/oder einen ringförmigen Verbindungskanal (34) des Spannzapfens (18).

8. Vorrichtung (38) zum Verspannen und Abrollen einer Etikettenbandrolle (10) für eine Etikettiereinrichtung, wobei die Vorrichtung (38) aufweist:
einen Rollenteller (12) zum Abrollen der Etikettenbandrolle (10); und
einen Spannzapfen (18) nach einem der vorherigen Ansprüche, der zum Verspannen der Etikettenbandrolle (10) an dem Rollenteller (12) angeordnet und bevorzugt lösbar an dem Rollenteller (12) befestigt ist, vorzugsweise über eine Montageabdeckung (28) an einer Oberseite des Spannzapfens (18).

9. Vorrichtung (38) nach Anspruch 8, ferner aufweisend:
eine Koppeleinrichtung (44), die dazu ausgebildet ist, eine Fluidverbindung zum Zuführen von Druckluft zu dem Spannzapfen (18) und/oder zum Abführen von Luft aus dem Spannzapfen (18) zu koppeln und zu entkoppeln.

10. Vorrichtung (38) nach Anspruch 9, wobei mindestens eines erfüllt ist von:
die Koppeleinrichtung (44) ist unterhalb oder radial außen von dem Rollenteller (12) angeordnet;
die Fluidverbindung verläuft abschnittsweise durch den Rollenteller (12);
die Koppeleinrichtung (44) ist zum Koppeln mit und Entkoppeln von einem Anschlussstück (46), das in oder an dem Rollenteller (12) zum Mitdrehen mit dem Rollenteller (12) angeordnet ist, angeordnet;
die Koppeleinrichtung (44) weist ein ein- und ausfahrbares Koppelstück (48) zum Koppeln und Entkoppeln der Fluidverbindung auf;
die Koppeleinrichtung (44) ist pneumatisch oder motorisch angetrieben;
die Fluidverbindung weist ein Rückschlagventil (50) auf; und
ein Drehantrieb (52), der antreibend mit dem Rollenteller (12) verbunden ist, ist dazu konfiguriert, den Rollenteller (12) in eine vorgegebene Koppelstellung zu drehen, in der die Fluidverbindung mittels der Koppeleinrichtung (44) koppelbar ist.

11. Vorrichtung (38) nach einem der Ansprüche 8 bis 10, wobei:
der Rollenteller (12) eine, vorzugweise oberseitige, Kontaktfläche (14) zum Kontaktieren der Etikettenbandrolle (10) aufweist; und
die Kontaktfläche (14) mindestens eine Griffmulde (16) zum Untergreifen der Etikettenbandrolle (10) aufweist,
wobei vorzugsweise ferner mindestens eines erfüllt ist von:
die mindestens eine Griffmulde (16) erstreckt sich in einer Radialrichtung des Rollentellers (12);
die mindestens eine Griffmulde (16) erstreckt sich bis hin zu einem Außenumfang des Rollentellers (12).

12. Verfahren zum Handhaben einer Etikettenbandrolle (10), wobei das Verfahren aufweist:
Verspannen der Etikettenbandrolle (10) mittels eines Spannzapfens (18) nach einem der Ansprüche 1 bis 8 oder mittels eines Spannzapfens (18) einer Vorrichtung (38) nach einem der Ansprüche 9 bis 11, wobei die mehreren Klemmbereiche (20) einen Rollenkern der Etikettenbandrolle (10) von innen klemmen, wobei vorzugsweise Hohlkammern (32) der mehreren Klemmbereiche (20) durch Druckluftbeaufschlagung ausgedehnt werden.

13. Verfahren nach Anspruch 12, wobei das Verfahren ferner mindestens eines aufweist von:
Drehen eines Rollentellers (12) in eine vorgegebene Koppelstellung und, in der Koppelstellung, Koppeln einer Fluidverbindung mittels einer Koppeleinrichtung (44) zum Zuführen von Druckluft zu dem Spannzapfen (18) zum Verspannen der Etikettenbandrolle (10) und/oder zum Abführen von Druckluft aus dem Spannzapfen (18) zum Freigeben der Etikettenbandrolle (10);
Übergeben der, vorzugsweise vollen, Etikettenbandrolle (10) an den Spannzapfen (18) mittels eines Innengreifers (26), dessen Innenklemmbacken (24) den Rollenkern der Etikettenbandrolle (10) von innen klemmen und beim Übergeben in Zwischenräume zwischen den Klemmbereichen (20) eintauchen; und
Übernehmen der, vorzugsweise leeren, Etikettenbandrolle (10) von dem Spannzapfen (18) mittels eines Innengreifers (26), dessen Innenklemmbacken (24) den Rollenkern der Etikettenbandrolle (10) von innen klemmen und beim Übernehmen in Zwischenräume zwischen den Klemmbereichen (20) eintauchen.

14. Verfahren zum Herstellen eines Spannzapfens (18) nach einem der Ansprüche 1 bis 8, wobei das Verfahren aufweist:
additives Fertigen des Spannzapfens (18) und/oder der mehreren Klemmbereiche (20), vorzugsweise in einem FLM-Verfahren.

15. Computerprogrammprodukt aufweisend Anweisungen, die eine additive Fertigungsvorrichtung veranlassen:
ein Verfahren nach Anspruch 14 durchzuführen; oder
einen Spannzapfen (18) nach einem der Ansprüche 1 bis 8 in einer Vielzahl von Materialschichten in einem additiven Fertigungsverfahren herzustellen.
